# EUROPEAN PATENT APPLICATION

(11) **EP 4 692 737 A1**
(43) Date of publication of application: **11.02.2026**
(21) Application number: 24193416.5
(22) Date of filing: 07.08.2024
(51) Int. Cl.: G01F 23/00, F01M 11/12, G01F 23/02

(54) **OIL LEVEL GAUGE ASSEMBLY FOR A COMPRESSOR AND COMPRESSOR**

(71) Applicant: KB Intellectual Property GmbH & Co. KG, 82049 Pullach (DE)
(72) Inventor: WINKLER, Michael, 80809 München (DE); HERDEN, Marc-Oliver, 81377 München (DE); ALAWEKAR, Rajdeep, 80809 München (DE); AVANTKAR, Laxmann, 80809 München (DE); AFSHAR, Ehsan, 80809 München (DE)

(57) **Abstract**

The present invention relates to an oil level gauge assembly (100) for a compressor, comprising:
an oil level gauge (10) comprising a housing (1) which delimits a chamber having an observation window (15) for observing an oil level of the compressor by the chamber being fluidically connectable to the compressor, and
an oil level sensor (30) comprising a sensing portion (32) configured to sense an oil level, and a connecting portion (31) providing an interface configured for a signal transfer of sensed data, wherein
the oil level sensor (30) is connected to the oil level gauge (10) with the sensing portion (31) extending thereby at least partially into an oil receiving volume of the housing (1).

## Description

The present invention relates to an oil level gauge assembly for a compressor, a respective retrofit kit and a compressor comprising such oil level gauge assembly.

In compressors, such as air compressors, specifically screw compressors, lubricating oil is usually used to lubricate and cool various components in the compressor. The normal operation of the oil supply system is directly related to the normal operation and service life of the compressor. If, for example, due to a malfunction of the lubricating oil circulation system, the amount of oil in the compressor is too low and the air compressor continues to operate, failures and damages may occur.

In order to check whether the oil quantity of the compressor is sufficient, the usual practice is to observe it through an oil level observation device of the compressor when the oil quantity of the air compressor is checked. The oil level observation device is mounted on, for example, the casing of the oil tank of the compressor, and can display the oil level in the oil tank. There is known an oil level observation device which is generally formed in the shape of a bolt. The bolt-shaped head is provided with a cavity and a circular observation window through which the oil level in the inside volume can be observed. The high oil level marking line and the low oil level marking line are respectively set beside the observation window adjacent to the highest point and the lowest point of the observation window. The bolt-shaped screw portion is provided with an external thread, and is configured to be able to be fixed to a mounting hole formed on a case body of the oil tank. When the oil level observation device is installed on the casing, the cavity is communicated to the inner space of the casing only through the communication hole extending in the screw part, so that the oil level in the inside volume is the same as the oil level in the casing.

Another oil level observation device is known from CN 214944887 U and relates to an oil level gauge for an air compressor, wherein the oil level gauge includes a housing that defines a chamber and has a function for observing the oil level by an observation window and showing the high oil level marking line and the low oil level marking line. The housing has two opposite ends in the longitudinal direction of the observation window. A first tube is connected to the housing at one end of the housing, and a second tube is connected to the housing at the other end of the housing.

However, any of the above oil level observation devices is based on a visual inspection of the respective observation window. Accordingly, an oil level may not be monitored continuously and a sudden drop of the oil level due to any failure or the like may not be detected within sufficient time to prevent potential damages. Further, the visual observation of the oil level by an operator may depend on different factors such as accessibility of the observation window, a viewing angle, obstacles for a visibility like dirt, scratches or the observation window becoming clouded.

It is an object of the present invention to provide an improved oil level monitoring which allows visual observation as well as a capability for an oil level monitoring independent of any visual observation.

The object is solved by the subject matter of the independent claims. Further aspects of the present invention are subject to the dependent claims.

According to the present invention, an oil level gauge assembly for a compressor, comprises an oil level gauge comprising a housing which delimits a chamber having an observation window for observing an oil level of the compressor by the chamber being fluidically connectable to the compressor. The oil level gauge assembly further comprises an oil level sensor comprising a sensing portion configured to sense an oil level and a connecting portion providing an interface configured for a signal transfer of sensed data. The oil level sensor is connected to the oil level gauge with the sensing portion extending thereby at least partially into an oil receiving volume of the housing.

Accordingly, the oil level sensor is integrated into the oil level gauge. Such integration may be implemented by the housing of the oil level gauge comprising a through hole with the sensing portion of the oil level sensor being inserted into the trough hole and connected to the housing by a threaded connection. In such event the oil level sensor may provide a male thread portion corresponding to a female thread portion of the through hole of the housing. Other embodiments of connecting the oil level sensor to the housing of the oil level gauge will be addressed further below.

The sensing portion of the oil level sensor is at least partially arranged in the oil receiving volume to detect an oil level in the oil receiving volume. The sensing portion is thereby at least arranged in the oil receiving volume to detect at least an oil level sensor minimum oil level and an oil level sensor maximum oil level. The oil level sensor minimum and maximum oil level may correspond to an oil level gauge minimum and maximum oil level visibly detectable via the observation window but may also be set differently. The oil receiving volume receive an oil volume representative of the oil level in the oil tank of the compressor or any other part of the compressor for monitoring an oil level.

In principle, the oil level gauge assembly with the oil level sensor being integrated into the oil level gauge may allow the oil level sensor to be arranged in a compact manner, to use the same fastening mechanism to the compressor or an oil tank thereof as the oil level gauge and/or to be retrofitted into an already existing oil level gauge.

In some embodiments, the oil receiving volume comprises or is fluidically connected to the chamber having the observation window.

Accordingly, the sensing portion of the oil level sensor may directly detect the oil level within the chamber as the oil receiving portion for sensing the oil level. However, the oil receiving portion may be provided separately from the chamber but may be fluidically coupled thereto by a through hole, piping or other channel to receive an oil level corresponding to the oil level within the chamber.

Alternatively, the oil receiving chamber may not be fluidically connected to the chamber formed by the housing of the oil level gauge but by a separate volume within the housing in fluidically connected to the oil tank or a respective other component of the compressor. According to such separate oil receiving volume, any failure by a supply or oil to the chamber and/or to the separate oil receiving volume may be detected by the observation window and the sensing portion of the oil level sensor. Further, by a separate oil receiving volume, the oil level may be detected at different parts of the compressor. For example, the oil level sensor may detect the oil level representative of an oil level at a part of the compressor or a specific location, where a low oil level may be critical while a visual inspection may be sufficient for less critical parts or locations.

In some embodiments, the oil receiving volume is provided by a connection structure of the housing configured to be connected to the compressor or a respective oil tank.

Such connection structure may already be available such that the connection structure may be able to provide an enhanced functionality in terms of allowing the oil level gauge to be connected to the oil tank as well as the integrating of the oil level sensor.

In some embodiments, the connection structure comprises a through hole to at least partially receive the sensing portion of the oil level sensor.

For example, the oil level gauge may already provide an at least partially threaded through hole which may has been intended to receive a screw for connecting the oil level gauge to the oil tank. According to the oil level gauge assembly of the present invention, the screw for connecting the oil level gauge to the oil tank may be replaced by the oil level sensor to be screwed into the through hole for the sensing portion of the oil level sensor being arranged in the through hole as oil receiving portion. The connecting portion of the oil level sensor may thereby be located at the opposite end of the oil level sensor with respect to the sensing portion and may thereby be located outside the connection portion or the housing, respectively, for easy accessibility. With the through hole serving as oil receiving portion, the sensing portion at least partially provides a smaller cross-section with respect to the diameter of the trough hole to allow a respective access of oil to the sensing portion for an accurate measurement. Such principle configuration of the sensing portion with respect to the oil receiving volume also advantageously applies for any other volume serving as oil receiving volume.

To connect the oil level gauge or the oil level gauge assembly to the oil tank in the event of replacing the screw by the oil level sensor, the oil level sensor may be configured to serve as such screw. For example, an end of the sensing portion opposite of the connecting portion may be configured as fixation means by a respective threaded portion. Alternatively or in addition, other fixation means may be implemented.

In some embodiments, the oil gauge assembly comprises a cover plate to connect the oil level sensor to the housing.

Accordingly, instead of directly connecting the oil level sensor to the housing, e.g. by screwing the oil level sensor into a through hole as described above, the cover plate may be used for indirectly connecting the oil level sensor to the housing. For example, the cover plate may comprise a cover plate through hole with the sensing portion being inserted into the cover plate through hole. The oil level sensor may be connected to the cover plate by being screwed into the cover plate through hole, bonded thereto by an adhesive, being soldered thereto, welded thereto or the like. Advantageously, the connection of the oil level sensor and the cover plate is substantially impermeable to fluids, to avoid the leakage of oil to the outside of the housing when the oil level sensor is received within the oil receiving portion and connected to the housing via the cover plate.

With respect to the previous example of the through hole of the connection structure service as oil receiving portion, the sensing portion of the oil level sensor may be received within the trough hole and the opening of the through hole facing the cover plate is covered by the cover plate. The cover plate may then be affixed to the housing, for example, by one or more screws. More than one screw and a respective arrangement thereof may improve tightening the cover plate to the housing.

In some embodiments, the cover plate comprises at least one elongated through hole for a fixing member to be inserted to connect the cover plate and thereby the oil level sensor to the housing.

By the at least elongated through hole, the position of the cover plate and thereby of the oil level sensor with respect to the housing may be adaptable over a range as provided by the respective trough hole. The adaption relates to a plane substantially perpendicular to the longitudinal axis of the fixing member, e.g. a screw, bolt or the like.

The adjustment of the position of the cover plate by the at least one elongated through hole does not only allow to compensate for tolerances but specifically allow the oil level sensor position to be adapted to different oil levels to be sensed.

In some embodiments, at least one spacer is arranged between the cover plate and the housing.

For example, if the cover plate is not flush with the housing at a position at which, for example, the fixing member is intended to be attached, the at least one spacer may prevent bending of the cover plate due to a respective connection. Alternatively or in addition, the distance between the housing and the cover plate may be adapted by the use of spacers such that the cover plate may be adapted to different housings on demand. The at least one spacer may be a sleeve positioned between the cover plate and the housing with the fixing member passing through the sleeve.

The cover plate and/or the housing may provide a receiving portion for the spacer. For example, a recess with a circular diameter in a plane perpendicular to the longitudinal direction of a circular sleeve, i.e. the direction along which the circular sleeve extends from one opening to the other, is provided by the housing. The circular diameter of the recess is equal to or slightly greater than the diameter of the circular sleeve to partially receive the circular sleeve such that the sleeve is prevented from being tilted or the like. Preventing tilting may be particularly advantageous during assembling the cover plate to the housing.

In some embodiments, at least one sealing member is arranged between the cover plate and the housing, preferably between the cover plate and the connection structure of the housing as previously described.

The at least one sealing member may thereby prevent leakage of oil to the outside. Specifically, with respect to the adaption of the position of the cover plate with respect to the housing with the at least one sealing member being arranged between the cover plate and the connecting structure, the at least one sealing member may be provided in a sealing member receiving portion of the housing, wherein the sealing member receiving portion is formed as a recess with a width in the direction of the relative movement between the cover plate and the housing being greater than the width of the at least one sealing member in the same direction. Accordingly, if the cover plate is relatively moved with respect to the housing along the extension of the one or more elongated through hole(s), the at least one sealing member may be allowed to slightly move within the sealing member receiving portion to receive less stress.

In some embodiments, the housing comprises at least one reference marking and at least one of the oil level sensor and the cover plate comprises at least one adjustment marking, the at least one reference marking and the at least one adjustment marking are configured to adjust the position of the oil level sensor with respect to the housing based on a detected relative position of the at least one adjustment marking with respect to the at least one reference marking.

The at least one reference marking may represent a neutral position, for example, indicative for a center axis of the trough hole of the connection structure to receive the sensing portion as per the previously described example. Accordingly, for example, with respect to the use of the cover plate with elongated through holes for a position adjustment of the oil level sensor, the cover plate may comprise an adjustment marking to indicate the oil level sensor position corresponding to the neutral position upon the adjustment marking position matching with the reference marking position.

The cover plate or the oil level sensor may also provide more than one adjustment mark, e.g. to indicate a predetermined off set of the oil level sensor.

In another aspect, the present invention relates to a retrofit kit for an oil level gauge assembly as previously described, wherein the retrofit kit comprises at least one of the oil level sensor and the cover plate.

Accordingly, an already existing oil level gauge may be retrofitted with the oil level sensor by use of the retrofit kit.

In another aspect, the present invention relates to a compressor comprising the oil level gauge assembly as previously described.

The compressor may be a screw compressor, specifically an oil injected screw compressor.

Further advantages, aspects and details of the invention are subject to the claims, the following description of exemplary embodiments applying the principles of the invention, and the respective exemplary drawings.
**Figure** 1 is a perspective view of an oil level gauge according to an exemplary embodiment the present invention is applicable to;
**Figure** 2 is a front view of the first half-shell of the oil level gauge according to Fig. 1;
**Figure** 3 is a front view of the oil level gauge according to Fig. 1 with respect to a connection of the oil level gauge to a compressor;
**Figure** 4 is a schematic front view of an oil level gauge assembly according to an exemplary embodiment of the present invention; and
**Figure** 5 is a schematic cross-sectional side view of the oil level gauge assembly according to Fig. 4.

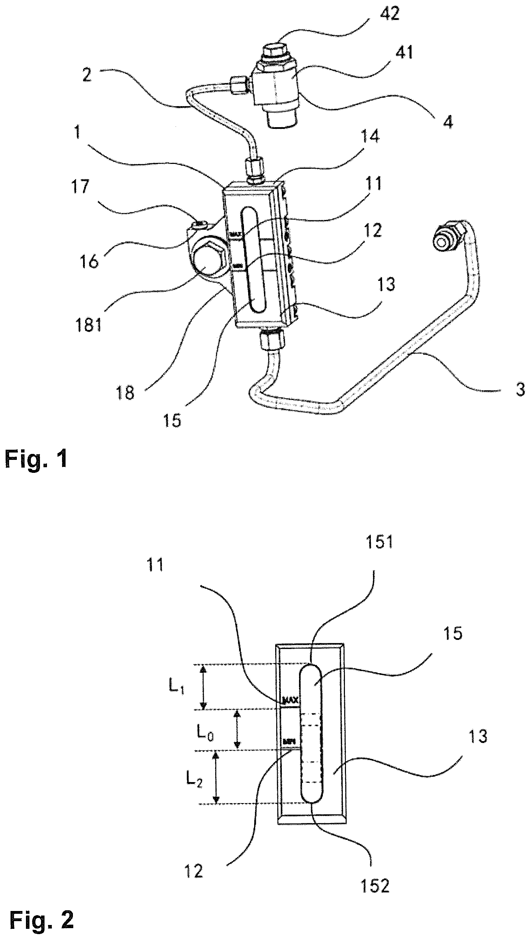

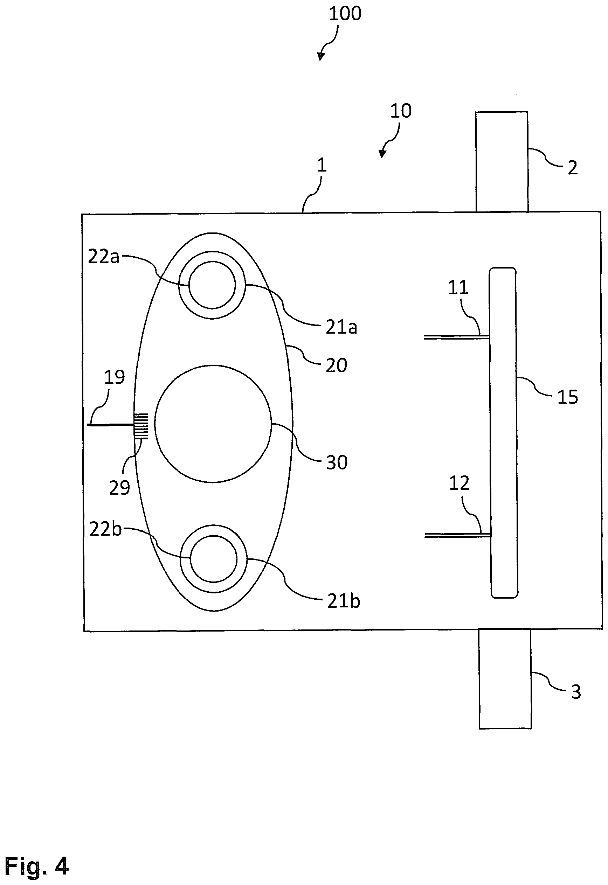

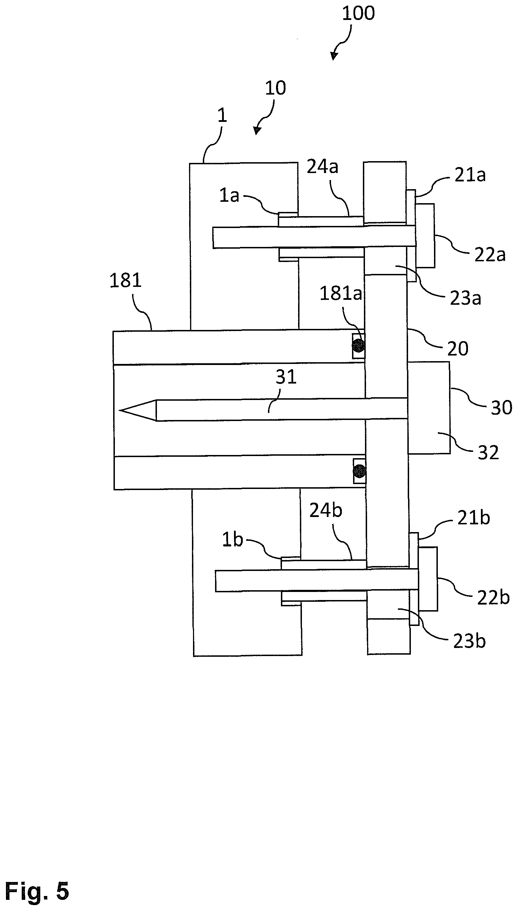

The following explanations on the oil level gauge assembly refers to the integration of an oil level sensor into an oil level gauge as per CN 214944887 US as an exemplary embodiment of an oil level gauge. Accordingly, the oil level gauge according to Figs. 1 to 3 are described first to provide an exemplary context for a respective configuration of the oil level gauge assembly as described with respect to Figs. 4 and 5. However, the oil level gauge according to Figs. 1 to 3 is just an exemplary embodiment of an oil level gauge, the present invention is applicable to, and other oil level gauges may also be suitable for an integration of an oil level sensor.

**Fig. 1** shows a perspective view of an oil level gauge 10 according to an exemplary embodiment. The oil level gauge 10 includes: a housing 1, which defines a chamber and has an observation window 15 for observing the oil level, a high oil level marking line 11 and a low oil level marking line 12. The observation window 15 has two opposite ends in the longitudinal direction, i.e. two opposite ends with respect to a longitudinal extension of the observation window 15 extending in a direction of an oil level changing direction. A first tube 2 is connected to the casing 1 at one end of the casing 1, here, an end associated with an increasing oil level. A second tube 3 is connected to the casing 1 at the opposite end of the casing 1, here, an end associated with a decreasing oil level. The first tube 2 and/or the second tube 3 extend(s) along a curved path being adaptable for allowing different connecting positions of the first tube 2 and/or the second tube 3 with respect to an oil tank of a compressor.

Accordingly, the oil level gauge 10 may be connected to the oil tank through the first pipe 2 and the second pipe 3 for a fluid connection of the chamber to communicate with the inner space of the oil tank through the first pipe 2 and the second pipe 3. In this way, the lubricating oil in the oil tank can flow into the casing 1 through the second pipe 3, and the gas in the oil tank, such as pressurized air, can flow into the casing 1 through the second pipe 3, so that the oil level in the casing 1 is consistent with the oil tank. The oil level inside is flush. The operator can visually check the oil level in the oil tank through the observation window of the housing 1. As said, since the first pipe 2 and/or the second pipe 3 are arranged to extend along a curved path being adaptable, the oil level gauge 10 can be flexibly adjusted. The first pipe 2 and/or the second pipe 3 may thereby be connected to the oil tank at different positions. The shape, size and installation position of the housing 1 of the oil level gauge 10 on the oil tank are not necessarily restricted with respect to the mounting position on the oil tank. As a result, a retrofit of the oil level gauge can be realized at low cost. For example, different shapes and sizes of oil level gauges can be fitted to existing fuel tanks without having to change the body of the oil tank.

In view of the above, the shape and size of the housing 1 and thus the observation window 15 of the oil level gauge 10 according to the exemplary embodiment may not be limited by the installation position of the first pipe 2 and/or the second pipe 3 on the oil tank. Accordingly, when the oil level gauge 10 needs to be modified, it may only be necessary to change the extension path of the first pipe 2 and/or the second pipe 3. In addition, if the installation position of the oil level gauge 10 on the oil tank needs to be changed, for example, the installation height can be changed. The oil tank can also be adapted simply by changing the extension path of the first tube 2 and/or the second tube 3.

As shown in Fig. 1, the housing 1 is formed, for example, in the shape of a bar, in particular in the shape of an approximately cuboid. The length of the housing 1 extending in the longitudinal direction is significantly greater than its width perpendicular to the longitudinal direction, for example the length of the housing 1 may be at least 2.5 times, in particular 3 times the width of the housing 1. It should be understood that the housing 1 may also be configured in other shapes, such as circular, triangular, and the like. The housing 1 can define a larger chamber for containing lubricating oil, which is beneficial to prevent clogging.

In the shown embodiment, the housing 1 includes a first half-shell 13 and a second half-shell 14, which are fixed to each other in a sealed manner. For example, the first half-shell 13 may be connected to the second half-shell 14 by means of screws, and a seal is provided between the first half-shell 13 and the second half-shell 14. The first half-shell 13 and the second half-shell 14 may be made of an aluminum alloy, for example.

Here, the second half-shell 14 has a first connection opening and a second connection opening at both ends, wherein the first tube 2 is mounted to the first connection opening and the second tube 3 is mounted to the second connection opening. The first tube 2 and/or the second tube 3 can be configured as rigid tubes. In particular, the first tube 2 and/or the second tube 3 can be configured to withstand a pressure of at least 10 bar, in particular at least 15 bar. For example, the first tube 2 and/or the second tube 3 may be made of stainless steel. It should be understood that the first tube 2 and/or the second tube 3 may also be configured as hoses, as long as they can accommodate the temperature and pressure within the screw compressor.

The housing 1 is provided with an observation window 15 extending in the longitudinal direction. The high oil level marking line 11 and the low oil level marking line 12 are arranged beside the observation window 15, wherein the high oil level marking line 11 and the low oil level marking line 12 are separated by a marking distance La. The high oil level marking line 11 and the low oil level marking line 12 may be respectively provided with corresponding markings, for example, the character markings "MAX" and "MIN" shown in the figure. The observation window 15 is at least translucent. As used herein, "at least translucent" includes the case of "translucent" and the case of "transparent". The observation window 15 is provided in the first half-shell 13. In other embodiments, the observation window 15 may be provided in the second half-shell 14 or the like. The observation window may be made of materials such as polycarbonate or glass, for example.

**Fig. 2** schematically shows a front view of the first half-shell 13 of the oil level gauge 10 according to the exemplary embodiment of Fig. 1. The observation window 15 terminates in opposite first and second end points 151 and 152 in the longitudinal direction of the observation window 15, wherein the high oil level marking line 11 is closer to the first end point 151, and the high oil level marking line 11 is next to the observation window. A first distance L₁ is spaced from the first end point 151 in the longitudinal direction of the oil level, the low oil level marking line 12 is closer to the second end point 152, and the low oil level marking line 12 is spaced from the second end point 152 by a second distance L₂ in the longitudinal direction of the observation window 15. The first distance L₁ and/or the second distance L₂ are large enough that the oil level of the oil tank of the screw compressor can be displayed through the observation window 15 in all normal states of the screw compressor. This enables the operator to observe the oil level at all times. Additionally, an additional oil dipstick is no longer required on the oil tank. The normal state of the air compressor includes the running state, the stop state and the oil quantity check state of the air compressor with normal oil quantity.

Usually, when checking the oil quantity, the oil level of the lubricating oil should be between the high oil level marking line 11 and the low oil level marking line 12 of the oil level gauge 10. For example, the condition of the oil quantity check is to run the screw compressor for 5 minutes, then stop it for 5-20 minutes, and check the oil quantity within this time frame.

As the operating conditions of the screw compressor change, the oil level in the oil tank can change significantly. In screw compressors used in railway trains, the oil level variation in the oil tank is particularly pronounced. For example, when the screw compressor is running, the lubricating oil is transported out of the oil tank and distributed in various parts of the screw compressor, such as the screw, piping and cooler. This causes the oil level in the oil tank to drop, and likely to drop below the low oil level line 12. At this time, the oil level in the oil tank may be, for example, within the range shown by the dotted line in Fig. 2.

When the screw compressor is shut down for a long time, for example, after 7-8 hours of shutdown, the oil level in the oil tank may rise to a certain extent, but it may still be below the low oil level marking line 12. At this time, the oil level in the oil tank may be, for example, within the range shown by the dashed-dotted line in FIG. 2.

In the exemplary embodiment, the first distance L₁ and/or the second distance L₂ may be set to be at least 0.8 times, especially 1 times, the indicated distance La.

In the exemplary embodiment, the second distance L₂ is set to be greater than the first distance L₁. However, in other embodiments, this may be optional. Under various operating conditions of the screw compressor, the oil level in the oil tank is likely to drop below the low oil level indicator line 12. However, according to the exemplary embodiment, the oil level of the oil tank of the screw compressor can be observed through the observation opening 15 in all normal states of the screw compressor.

In the exemplary embodiment, the second distance L₂ is set to be larger than the indicated distance La, e.g., may be set to be at least 1.2 times the indicated distance La. This is particularly advantageous to enable observation of the oil level of the oil tank of the screw compressor, in particular of the screw compressor for railway trains, through the observation window 15 in all normal states of the screw compressor.

In the exemplary embodiment, the housing 1 comprises an oil drain port 16 (not visible in the figure, the reference numeral 16 only schematically indicates the location of the oil drain port). The oil drain port 16 communicates with the chamber, and an oil plug 17 is detachably provided at the oil drain port 16. The oil plug 17 is configured to be able to seal the oil drain port 16. Excess lubricating oil can be drained from the oil tank through the oil drain port 16. For example, adding too much lubricating oil to the screw compressor can be avoided.

In particular, here, the oil drain port 16 is flush with the high oil level marking line 11 in the longitudinal direction of the observation window 15. In other words, when viewed in the vertical direction, the oil drain port 16 is flush with the high oil level marking line 11. Therefore, it is advantageous to control the oil level in the oil tank to be below the high oil level marking line 11. For example, when filling the oil tank, the oil plug 17 can be opened. If too much lubricating oil is added so that the oil level exceeds the high oil level marking line 11, the excess lubricating oil will flow out through the oil drain port 16.

In the exemplary embodiment, the housing 1 comprises a projection 18 protruding laterally with respect to the longitudinal direction of the observation window 15. The projection 18 provides a connecting structure 181 arranged to be able to secure the housing 1 to the oil tank. The connecting structure 181 may include threaded holes, bolts, washers, and the like, for example. Thereby, the housing 1 of the oil level gauge 10 can be firmly fixed to the oil tank of the screw compressor. At the same time, the shape, size and installation height of the housing 1 of the oil level gauge 10 are not greatly affected by the connection structure 181. In other words, the connecting structure 181 of the housing 1 is arranged on the side of the observation window 15, not above or below, which is beneficial to realize flexible modification of the oil level gauge at low cost. However, alternative embodiments may provide another arrangement.

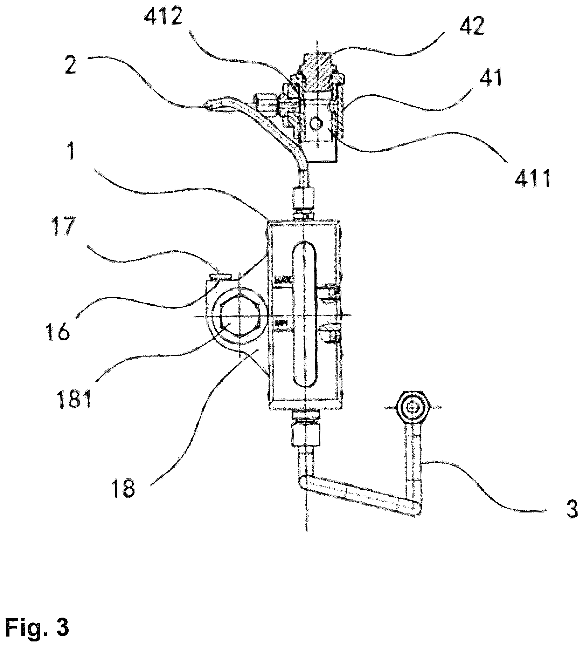

**Fig. 3** schematically shows a front view of the oil level gauge 10 according to Figs. 1 and 2.

The first tube 2 is connectable to a filler plug 4 which is arranged to be mountable to a filler opening of a oil tank and has a filler opening which is arranged to be opened and closed for passage through the filler opening to fill the oil tank. The filler plug 4 can be detachably connected to the filler opening of the oil tank, for example, by a threaded structure. The filler plug 4 may be part of the oil level gauge 10. Alternatively, the filler plug 4 can also be provided as a separate component.

In view of the above, the first tube 2 can be connected to the filler opening of the oil tank via the filler plug 4, which makes it unnecessary to provide an additional connection opening on the oil tank body for connecting the first tube 2. The filler opening is usually located at the upper part of the oil tank and will not be submerged by lubricating oil. This position is particularly suitable for installing the first tube 2, so that the air pressure in the chamber of the oil level gauge 10 is consistent with the air pressure in the oil tank. This is especially important for the accuracy of the oil level display.

In the exemplary embodiment, the filler plug 4 includes a plug body 41 and a plug cover 42, wherein the plug body 41 has a through hole 411, and one end of the through hole 411 is configured to extend into or to be connected to the first tube 2, the other end of the through hole 411 forms a filler opening. The plug cover 42 may be detachably connected to the filler opening through a threaded structure. When it is necessary to add lubricating oil, the plug cover 42 can be simply opened, and the oil tank can be filled with oil through the filler opening.

The plug body 41 has a side opening 412 that extends laterally and substantially perpendicular with respect to the through hole 411 and communicates with the through hole 411. The first tube 2 is connected to the side opening 412.

Generally, in a screw compressor, the temperature of each part is different. In the working state of the oil level gauge 10, the first pipe 2 is connected to the upper part of the oil tank, and the temperature is usually higher, and the second pipe 3 is connected to the lower part of the oil tank, and the temperature is usually lower. Too low temperatures may cause the lubricating oil to agglomerate and clog.

In the exemplary embodiment, the inner diameter of the second tube 3 is set to be at least 8 mm. As a result, the oil level gauge 10 can be adapted to a lower ambient temperature without clogging in the piping. For example, the oil level gauge 10 is set to accommodate ambient temperatures ranging from -40°C to +55°C.

Alternatively or additionally, the inner diameter of the second tube 3 is larger than the inner diameter of the first tube 2. This also helps prevent clogging in the oil level gauge 10.

Seals can be provided at the connection between the various components of the oil level gauge 10 and the connection between the various components of the oil level gauge 10 and the oil tank of the screw compressor to prevent the leakage of lubricating oil.

The components of the oil level gauge 10 are constructed to withstand high temperatures of at least 100°C, especially 120°C, and pressures of at least 10 bar, especially at least 15 bar.

**Fig. 4** shows a schematic front view of an oil level gauge assembly 100 according to an exemplary embodiment of the present invention. The oil level gauge assembly 100 in the exemplary embodiment comprises the oil level gauge as per Figs. 1 to 3. However, in other embodiments, other types of an oil level gauge may be applied. The oil level gauge assembly 100 further comprises an oil level sensor 30 attached to the housing 1 of the oil level gauge 10 by a cover plate 20. Therefore, a sensing portion 31 (Fig. 5) of the oil level sensor 30 is inserted into a through hole of the cover plate 20 which will be further described with respect to Fig. 5. In the exemplary embodiment, the cover plate 20 provides an oval shape in a plane in parallel with the contact surface of the housing 1. However, in alternative embodiments, the shape of the cover plate 20 may be different in accordance with constructive boundary conditions or the like.

The cover plate 20 is attached to the housing by two screws 22a, 22b, wherein a respective washer 21a, 21b is arranged between each head of the screws 22a, 22b and the cover plate 20 to enlarge a seating, specifically with respect to elongated through holes 23a, 23b as further described with respect to Fig. 5. In the exemplary embodiment, the screw 22a is positioned in an upper position with respect to an oil level and the screw 22b is positioned in a lower position with respect to an oil level. However, in other embodiments, the number of screws and their respective positioning may differ from the exemplary embodiment.

For a reproducible positioning of the cover plate 20 and thereby the oil level sensor 30 with respect to the housing 1, the housing 1 shows a reference marking 19 adjacent to the cover plate 20. The reference marking 19, here a straight line extending in a direction of an oil level, indicates a neutral position. To position the oil level sensor 30 in the neutral position or in a position with a predetermined offset from the neutral position, the cover plate 20 comprises several adjustment markings 29 in a portion of the cover plate 20 adjacent to the reference marking 19. In the exemplary embodiment, the adjustment marking 29 in the center of the several adjustment markings 29 represents the center position of the sensing portion 31. To position the center portion of the sensing portion 31 in the neutral position, the position of the cover plate 20 and thereby oil level sensor 30 are adjusted to match with the position of the adjustment marking 29 in the center with the reference marking 19. If the sensing portion 31 should be positioned offset from the neutral position, the other markings 29 indicate a respective offset in a positive or negative direction. The reference marking 19 and the adjustment markings 29 are formed as grooves. In other embodiments, alternatively or in addition, the markings 19, 29 may be coloured. Further, in other embodiments, the reference marking 19 and/or the adjustment markings 29 may not be limited to be positioned on a respective surface in parallel with the contact surface of the housing 1. Alternatively or in addition, the reference marking 19 and/or the adjustment markings may be provided at a lateral surface perpendicular to the contact surface of the housing 1.

**Fig. 5** shows a schematic cross-sectional side view of the oil level gauge assembly 100 according to Fig. 4. As shown in Fig, 5, the oil level sensor 30 is configured as a rod member with a sensing portion 31 inserted into an oil receiving volume defined by the inner space formed by the connection structure 181 shaped as a hollow cylinder, and a connecting portion 31 to be connected to a signal line to transmit the data sensed by the sensing portion 31. The sensing portion 31 has a smaller diameter in a direction perpendicular to the longitudinal direction than the connecting portion. Near the connecting portion 32, the sensing portion 31 comprises a threaded portion with a male thread to be screwed into a corresponding threaded through hole of the cover plate 20 until the connecting portion 32 abuts on the cover plate 20. However, in other embodiments, the oil level sensor 30 may be connected differently, e.g. by being bonded by an adhesive or the like.

As previously described, the cover plate 20 is connected to the housing 1 by the screws 22a, 22b. To support the cover plate 20 and avoid bending of the cover plate 20 with respect to the distance between the cover plate 20 and the housing 1 at the positions to screw the screws 22a, 22b into the housing 1, each of the screws 22a, 22b passes through a respective spacer 24a, 24b each of which is formed as a sleeve. To support the sleeves at least at one end thereof, the housing 1 comprises respective receiving portions 1a, 1b.

To adjust the position of the sensing portion 31 within the oil receiving volume, the cover plate 20 comprises elongated through holes 23a, 23b for each of the screws 22a, 22b. In the exemplary embodiment, the elongation of each of the elongated through holes 23a, 23b extends in a direction in which the oil level increases or decreases, respectively, as a direction of the oil level. Accordingly, the position of the sensing portion 31 can be adjusted in the oil level direction due to the elongated through holes 23a, 23b. The adjustment can be controlled by the reference marking 19 and the adjustments markings 29 as previously described. However, in alternative embodiments, the control may be implemented differently.

For the avoidance of an oil leaking from the oil receiving volume, a sealing member 181a is provided in a respective recess in a front end of the connection structure 181 facing the cover plate 20. The width of the recess in the oil level direction is slightly larger than the width of the sealing member 181a in the same direction to allow some relative movement of the sealing member 181a.

Although specific embodiments of the present invention are described in detail herein, they are presented for purposes of explanation only and should not be considered as limiting the scope of the present invention.

### LIST OF REFERENCE SIGNS

- 1: housing
- 1a, 1b: receiving portion
- 2: first tube
- 3: second tube
- 4: filler plug
- 10: oil level gauge
- 11: high oil level marking line
- 12: low oil level marking line
- 13: first half-shell
- 14: second half-shell
- 15: observation window
- 16: drain port
- 17: oil plug
- 18: protrusion
- 19: reference marking
- 20: cover plate
- 21a, 21b: washer
- 22a, 22b: screw
- 23a, 23b: elongated through hole
- 24a, 24b: spacer
- 29: adjustment marking
- 30: oil level sensor
- 31: sensing portion
- 32: connecting portion
- 41: plug body
- 42: plug cover
- 100: oil level gauge assembly
- 151: first endpoint
- 152: second endpoint
- 181: connection structure
- 181a: sealing member
- 411: through hole
- 412: side opening
- L₀: marking distance
- L₁: first distance
- L₂: second distance

## Claims

1. An oil level gauge assembly (100) for a compressor, comprising:
an oil level gauge (10) comprising a housing (1) which delimits a chamber having an observation window (15) for observing an oil level of the compressor by the chamber being fluidically connectable to the compressor, and
an oil level sensor (30) comprising a sensing portion (32) configured to sense an oil level, and a connecting portion (31) providing an interface configured for a signal transfer of sensed data, wherein
the oil level sensor (30) is connected to the oil level gauge (10) with the sensing portion (31) extending thereby at least partially into an oil receiving volume of the housing (1).

2. The oil level gauge assembly (100) according to claim 1, wherein the oil receiving volume comprises or is fluidically connected to the chamber having the observation window (15).

3. The oil level gauge assembly (100) according to any one of the preceding claims, wherein the oil receiving volume is provided by a connection structure (181) of the housing (1) configured to be connected to the compressor or a respective oil tank.

4. The oil level gauge assembly (100) according to the preceding claim, wherein the connection structure comprises a through hole in order to at least partially receive the sensing portion (31) of the oil level sensor.

5. The oil level gauge assembly (100) according to any one of the preceding claims, wherein the oil gauge assembly (100) comprises a cover plate (20) to connect the oil level sensor (30) to the housing (1).

6. The oil level gauge assembly according to the preceding claim, wherein the cover plate (20) comprises at least one elongated through hole (23a, 23b) for a fixing member (22a, 22b) to be inserted to connect the cover plate (20) and thereby the oil level sensor (20) to the housing (1).

7. The oil level gauge assembly (100) according to claim 5 or 6, wherein at least one spacer (24a, 24b) is arranged between the cover plate (20) and the housing (1).

8. The oil level gauge assembly (100) according to any one of the claims 5 to 7, wherein at least one sealing member is arranged between the cover plate (20) and the housing (1), preferably between the cover plate (20) and the connection structure (181) of the housing according to claim 3.

9. The oil level gauge assembly (100) according to any one of the preceding claims, wherein the housing (1) comprises at least one reference marking (19), and at least one of the oil level sensor (30) and the cover plate (20) comprises at least one adjustment marking (29), the at least one reference marking (19) and the at least one adjustment marking (29) are configured to adjust the position of the oil level sensor (30) with respect to the housing (1) based on a detected relative position of the at least one adjustment marking (29) with respect to the at least one reference marking (19).

10. A retrofit kit for an oil level gauge assembly (100) according to any one of the preceding claims, wherein the retrofit kit comprises at least one of the oil level sensor (30) and the cover plate (20).

11. A compressor comprising the oil level gauge assembly (100) according to any one of the claims 1 to 9.
